# EUROPEAN PATENT SPECIFICATION

(11) **EP 2 420 674 B1**
(45) Date of publication and mention of the grant of the patent: **09.07.2014**
(21) Application number: 10461536.4
(22) Date of filing: 29.12.2010
(51) Int. Cl.: F03G 3/08, F16F 7/10, F16F 15/31

(54) **Method of accumulating kinetic energy and rotor device for accumulating and dissipating kinetic energy**
Verfahren zur Akkumulierung kinetischer Energie und Rotorvorrichtung zur Akkumulierung und Ableitung kinetischer Energie
Procédé pour accumuler l'énergie cinétique et dispositif rotor pour accumuler et dissiper l'énergie cinétique

(30) Priority: 19.08.2010 PL 39218110
(43) Date of publication of application: 22.02.2012
(73) Proprietor: Epar Sp. z o.o., 58-540 Karpacz (PL)
(72) Inventor: Lagiewka, Przemyslaw, 58-530 Kowary (PL); Gumula, Stanislaw, 30-079 Kraków (PL)
(74) Representative: Lukaszyk, Szymon

(56) References cited:
- DE-A1- 3 916 703
- US-A1- 2004 011 924

## Description

This invention relates to a method of accumulating kinetic energy and a rotor device for accumulating and dissipating kinetic energy from the collision of objects being in motion, applicable for braking thereof. The solution can be applied in particular for accumulating and dissipating energy of automotive vehicles and other objects vulnerable to effects of an unexpected collision.

A method of protecting vehicles against effects of collisions is known from the international patent application WO2004028864, where the kinetic energy created during a collision is converted into energy of rotating weights. According to this known method the kinetic energy of driving means is converted into kinetic energy of a rotor device having variable moment of inertia by bringing the rotor into the rotary motion. The variability of the moment of inertia of the rotor device is achieved thanks to the fact that a weight changes its position along a guide under the influence of a centrifugal force.

From the description of the international patent application WO2004028864 there is also known a device for protecting vehicles against collision effects, in which kinetic energy generated as the result of a collision is converted into energy of rotating weights. In this known solution a beater means is provided with two toothed bars, which by means of gears drive rotors made as rods with movable weights slidably fitted on them. The minimization of impact load acting on co-operating components in the initial stage of energy transmission is achieved in this known solution by using movable weights placed as closely as possible to the rotation axis of the rod rotor, so that the moment of inertia of the rotor in that initial stage is the lowest. In the further stage of the motion, when the rotor begins to rotate, said weights are moved by a centrifugal force away from the rotary axis along the rod axis up to its end stops, and in this position the highest moment of inertia of the rotor is achieved, and in effect the increased kinetic energy is taken over.

The drawback of this known solution is the lack of possibility to appropriately select the characteristics of the moment of inertia while taking the energy.

DE 3916703, considered as the closest prior art, discloses a mechanical shock absorber including driving means transmitting kinetic energy to a rotor. The rotor has a guides in which are placed weights increasing the moment of inertia while increasing the rotor speed. The weights are slidably fitted in the guides and joined to an inner ring by means of return springs with the result that the moment of inertia at low rotor speed is less than the moment of inertia at high rotational speed of the rotor.

From the description of the international patent application WO2005121593 there is also known a kinetic energy converting device comprising a beaten means cooperating with an energy dissipating assembly made as a toothed bar bringing rotary weights into rotary motion in order to convert the kinetic energy of translational motion created in the result of the collision into the kinetic energy of rotary motion. In one of the embodiments of the known solution, the toothed bar drives the rotor via a gear, said rotor being a rod with slidably mounted movable weights. In this solution the rod has a determined constant moment of inertia and additionally acts as a guide for movable weights. In order to ensure gradual adjustment of the inertia moment of a rotor, springs are placed between the end stops of the rod and movable weights, what ensures maintaining the movable weights in an appropriate distance from the rotation axis, what depends on the rotational speed of the rotor. Such a solution ensures a smoother increase of the rotor inertia moment with the increase in its rotational speed, since the springs protect the movable weights from immediate reaching the end position already in the initial stage of the rotor rotation.

However, springs used in the known solution limit the capability to increase the moment of inertia of the entire system which takes the energy when centrifugal forces resulting from the rotation of movable weights equal the reaction forces of the compressed springs. Therefore, the known structure prevents the appropriate selection of the characteristics of the rotor inertia moment while taking the energy.

US 2004/0011924 discloses a lift-generating unit for levitating a platform comprising two weight units being disposed of rotating armature. The weights are disposed at opposite ends of the rotating armature and controlled by additional control devices to produce a lifting force directed in the desired direction. In a particular embodiment the known unit has two pairs of dual weights made in the form of gears, which are moved between upper gear weight travel stopper and lower gear weight travel stopper. In order to produce the lifting force the rotation and traverse of the gear weights is caused by gear weight motor set.

It is an object of the solution according to the invention to improve the possibility of adjusting the moment of inertia of the energy accumulating rotor, and thereby to improve the effectiveness of taking over and dissipating different portions of energy.

Another aim of the solution according to the invention is to provide a rotor device which with a low total weight ensures a low moment of inertia in the starting moment and a considerable increase of this moment when the kinetic energy is further taken over.

According to the method provided by the invention the kinetic energy of driving means made as a toothed bar is converted into the kinetic energy of a rotor device having a variable moment of inertia by bringing the rotor into rotary motion, whereas said variable moment of inertia of the rotor device is achieved by at least one weight moved by a centrifugal force along a trajectory set by a guide integrated with the rotor. This solution is characterised in that the weight moved along the trajectory set by the guide and meshed with a toothed driving surface is brought into rotary motion in relation to its axis by the centrifugal force, thus smoothly increasing the moment of inertia of the entire rotor device, and thereby also its capacity to take over larger kinetic energy.

The variable moment of inertia of the rotor device is advantageously achieved by the movement of many rotary weights caused by the centrifugal force. In another advantageous solution various rotational speeds are imparted onto at least two of the rotary weights in relation to their axes.

The rotor device accumulating and dissipating kinetic energy from the collision of objects being in motion according to the invention contains driving means made as a toothed bar transferring its kinetic energy to a rotor having a variable moment of inertia, and having at least one guide, along which a weight increasing the moment of inertia is moved by centrifugal force related to the rotation of the rotor. This solution is characterised in that the rotor guide has a toothed driving surface with which a gear meshes, said gear being a rotary weight.

This gear is advantageously connected axially with an additional rotary weight by means of a driving shaft slidably fitted in guiding recesses in covers.

with the additional rotary weights being slidably fitted in a guiding recess formed in the rotor, whereas the path of the guiding recess being parallel to the path of the guide comprising the toothed driving surface.

The gear is advantageously axially connected via the driving shaft with additional rotary weights situated at both face sides of the rotor, while the driving shaft connecting the gear with the additional rotary weight is slidably fitted in guiding recesses made in covers.

The additional rotary weight is also advantageously connected axially with the gear by means of a one-way clutch.

In an advantageous embodiment the guide with a toothed driving surface extends substantially radially in relation to the rotor axis. In another advantageous embodiment the rotor has many guides with the toothed driving surface, said guides being arranged substantially radially in relation to the rotor axis. It is also advantageous when said guides have their toothed driving surfaces of different length.

In another advantageous embodiment the rotor has multiple guides having a toothed driving surface, whereas at least two additional rotary weights have different moments of inertia.

In another advantageous embodiment the rotor has many guides with a toothed driving surface, said at least two additional rotary weights being driven by the gears of different diameters.

In another advantageous embodiment the rotor is made as a gear with its teeth meshing with a driving means made in the form of a toothed bar, and in addition the driving means is fitted with a shock absorber.

In the method according to the invention an increased capacity to accumulate increased kinetic energy is achieved by bringing the weight into additional rotary motion in relation to its own axis by a centrifugal force related to the rotation of the rotor.

Additional rotary motion of the weight moved by a centrifugal force is achieved in the rotor device according to the invention by using a toothed driving surface on the rotor guide and constructing a weight in the form of a gear coupled with that toothed driving surface, and thereby the energy absorbing capacity is increased. By selecting the quantity of additional rotary weights, their moments of inertia and lengths of guides with a toothed driving surface or the diameter of gears the capability to adjust the flexibility of action of the rotor device according to the invention is achieved. A proper adjustment of the flexibility of action of the rotor device according to the invention is aimed at achieving an suitably low initial moment of inertia, causing low impact load of the device components in the initial stage of energy accumulation, and accordingly increasing a moment of inertia in the subsequent stages of energy accumulation. The structure of the rotor device according to the invention ensures also achieving relatively high moments of inertia of the entire device with relatively low weight of the parts brought into motion.

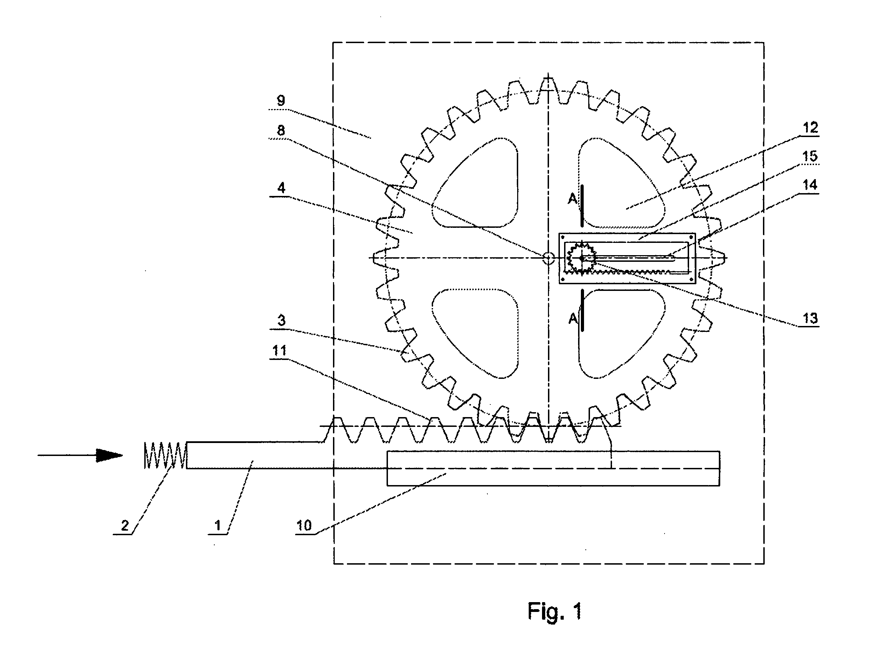

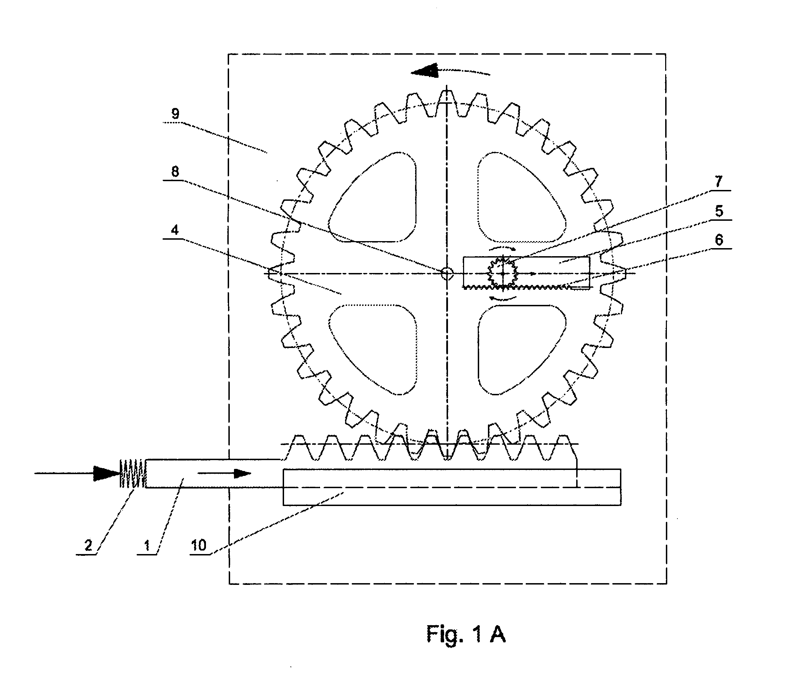

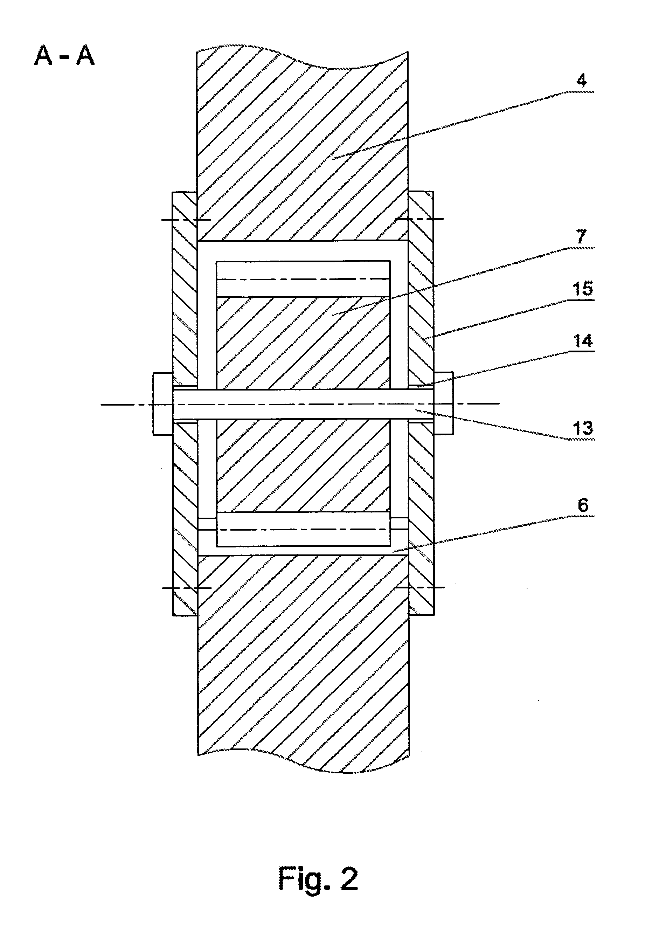

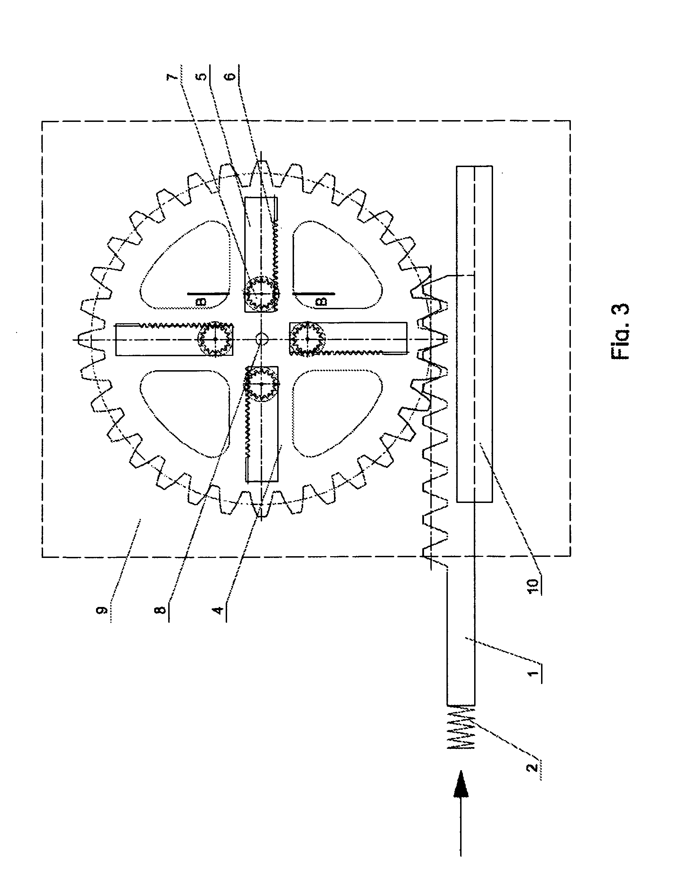

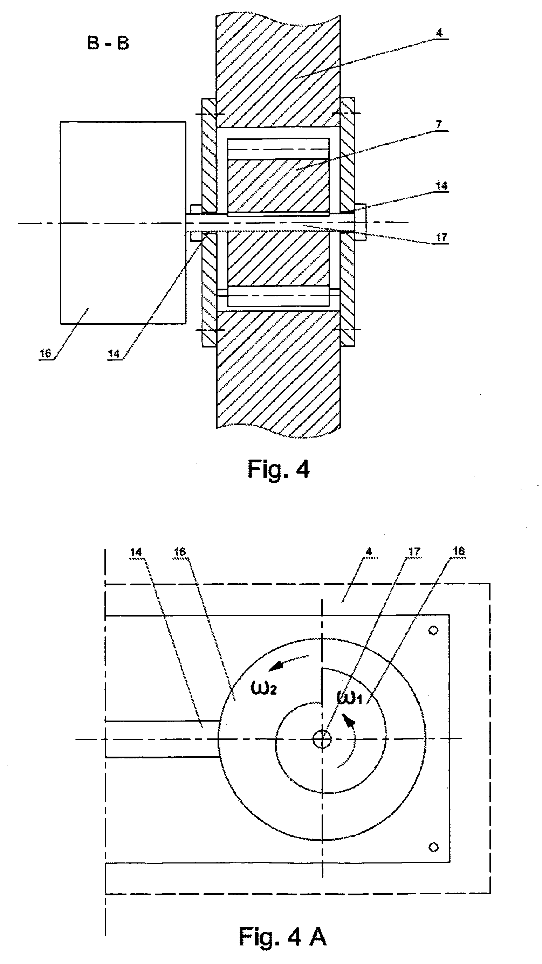

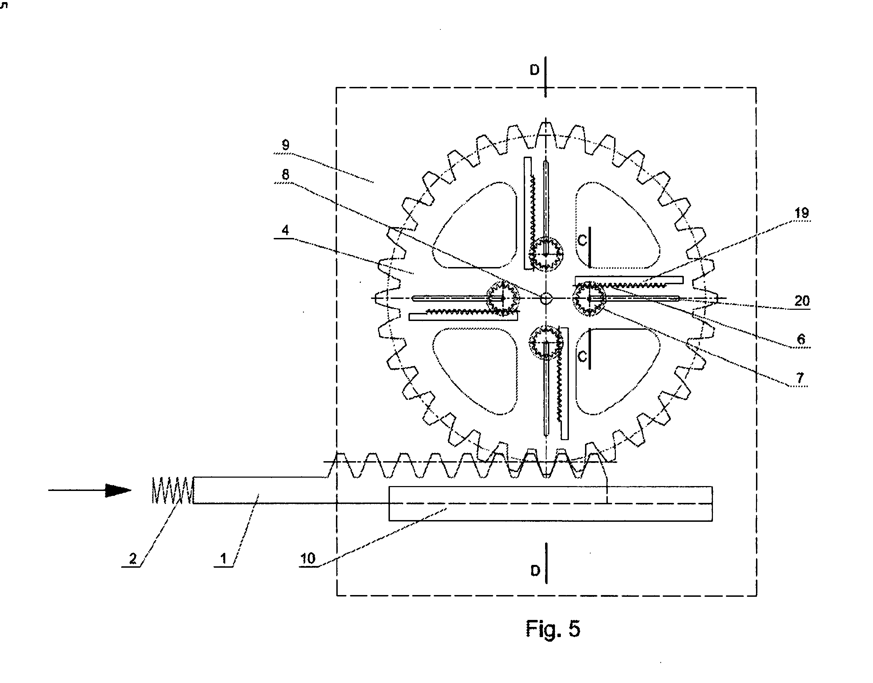

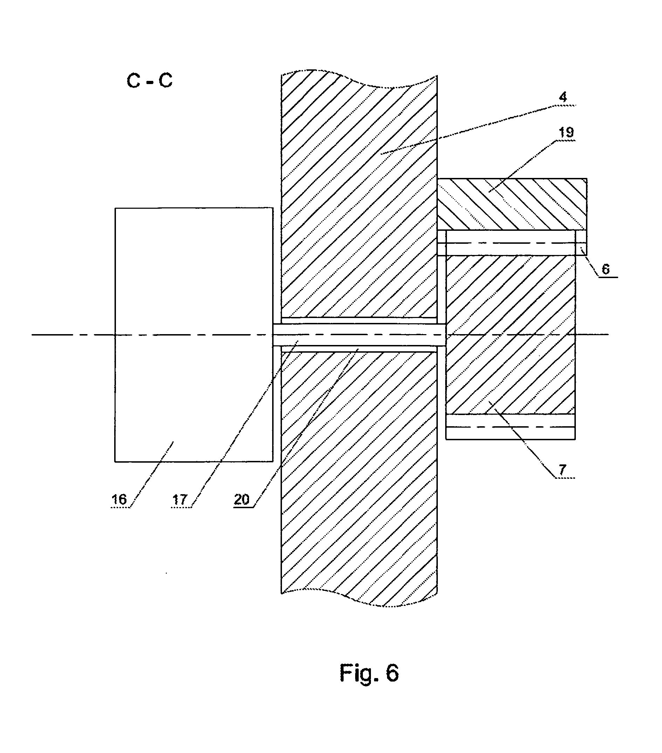

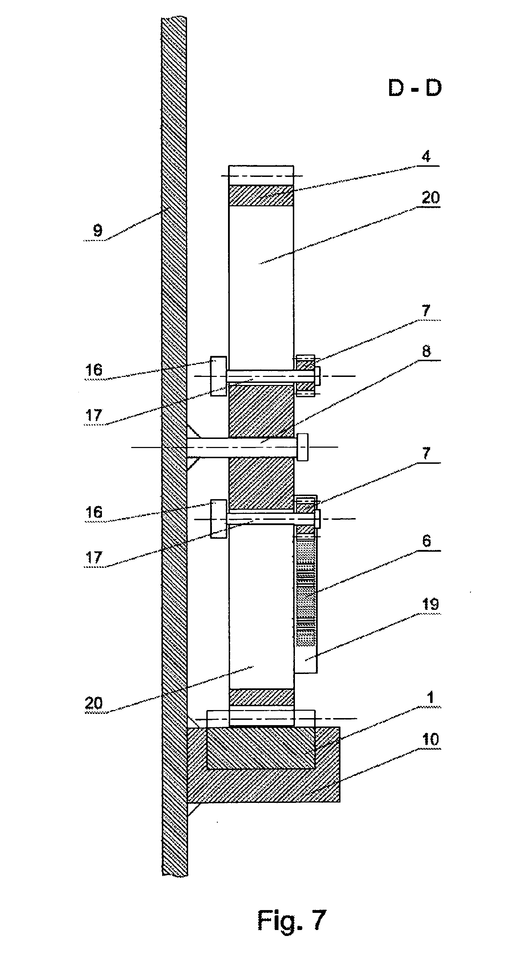

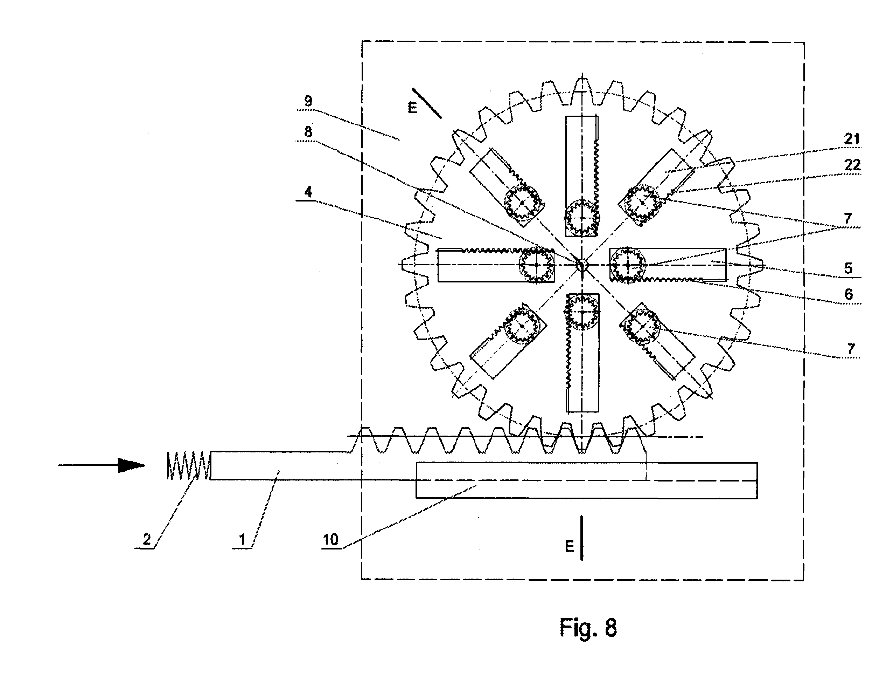

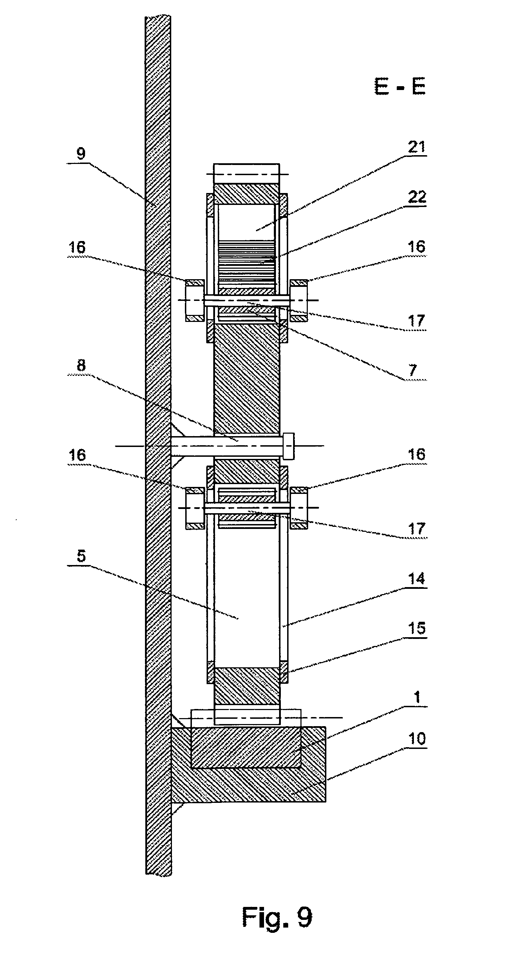

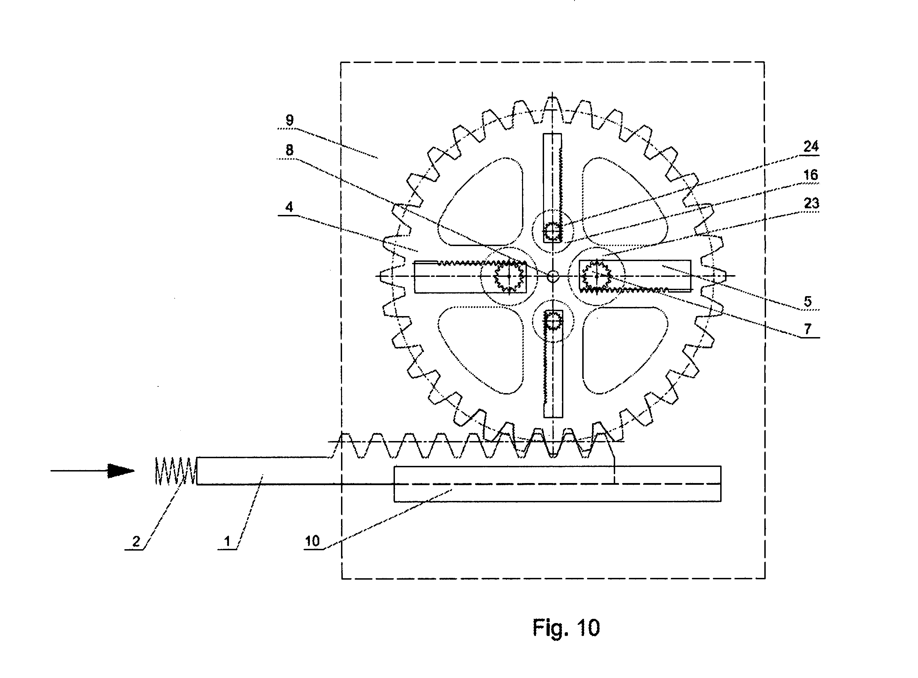

The object of the invention is presented schematically in an embodiment in a drawing, in which fig. 1 presents a rotor device in its first embodiment in a side view, fig. 1A the same rotor device as in fig. 1 shown in a side view, with guide cover dismounted, and with direction of rotation and movement of individual device components being marked, fig. 2 the solution shown in fig. 1 in the cross-section along the A-A line, fig. 3 the rotor device in its second embodiment with an additional rotary weight in a side view, fig. 4 the cross-section of the solution of fig. 3 along the B-B line, fig. 4A the schematic view of the one-way clutch mounted in the additional rotary weight, fig. 5 the rotor device in its third embodiment with a guide with a toothed driving surface situated at one face side of the rotor in a side view, fig. 6 the cross-section of the solution shown in fig. 5 along the C-C line, fig. 7 the cross-section of the solution shown in fig. 5 along the D-D line, fig. 8 the rotor device with guides having toothed driving surfaces of differing length, fig. 9 the cross-section of the solution of fig. 8 along the E-E line, and fig. 10 the rotor device with additional rotary weights with differing moments of inertia.

In accordance with the method consistent with the invention, the kinetic energy of driving means made as a toothed bar is converted into kinetic energy of a rotor device having a variable moment of inertia by bringing the rotor into rotary motion. The centrifugal force resulting from the rotary motion of the rotor brings weights into movement along a trajectory set by the guides, what results in the movement of said weights away from the rotation axis of said rotor, thereby increasing the moment of inertia of the entire rotor device. In order to additionally increase the moment of inertia, the weights moving along the trajectory set by their guides are brought by a centrifugal force into additional rotary motion in relation to their axes. Further changes of the characteristics of moment of inertia are achieved by imparting differing rotational speeds to rotary weights in relation to their axes, what has been realized for example by driving rotary weights by means of gears having different pitch diameters.

In the embodiment presented in fig. 1, fig. 1A and fig. 2 the rotor device for accumulating and dissipating kinetic energy according to the invention has a driving means 1 made as a toothed bar with an elastic shock absorber 2. This driving means meshes with teeth 3 of the rotor 4 having a variable moment of inertia. The rotor 4 has a guide 5 with a toothed driving surface 6, with which meshes a gear 7 being a rotary weight. In the initial position the gear 7 is meshed with the toothed driving surface 6 of the guide 5, closest to the rotation axis of the rotor 4. The axis 8 of the rotor 4 is fastened to the load-bearing structure 9 of a vehicle, whereas the guide 10 of the driving means 1 is fastened to said structure. Therefore, when the device is in action, the guide 10 remains immobile in relation to the load-bearing structure 9, while the mobile toothed bar being the driving means 1 brings the rotor 4 into rotary motion. In order to decrease the impact load of the teeth 11 of the driving means 1 and the teeth 3 of the rotor 4 in the initial stage of energy transmission the rotor weight 4 is decreased by making load-relieving openings 12 therein. As shown in fig. 1 and fig. 2, the gear 7 being the rotary weight is fastened rotatably on the axis 13, which is slidably fitted in guiding recesses 14 made in covers 15, said covers 15 being fastened to the face surfaces of the rotor 4 at the both sides of the guide recess 5.

In order to better demonstrate the principle of action of the solution according to the embodiment, in fig. 1A the rotor device is shown in a side view without the cover 15. Plane and rotary motions of the individual components of the device are indicated in that figure accordingly by arrow lines.

In fig. 3 and fig. 4 the second embodiment of the invention with additional rotary weights 16 driven by gears 7 is shown. Four radial guides 5 with toothed driving surfaces 6 coupled with gears 7 are made in rotor 4. Covers 15 are not shown in fig. 3 in order to better demonstrate the location of gears 7 in guides 5. Similarly as in the preceding embodiment, the axis 8 of the rotor 4 is fastened to the load-bearing structure 9 of a vehicle, whereas the guide 10 of the driving means 1 is also fastened to said structure. As shown in fig. 4, gears 7 are axially connected via driving shafts 17 with additional rotary weights 16 placed at the face side of the rotor 4. The driving shaft 17 connecting each gear 7 with an additional rotary weight 16 runs in guiding recesses 14 made in covers 15, whereas the paths of the guiding recesses 14 are parallel to the corresponding guide paths 5 with toothed driving surfaces 6. In order to enable the dissipation of kinetic energy each additional rotary weight 16 is fitted with a one-way coupling 18 shown schematically in fig. 4A. The one-way coupling 18 is tasked with transmitting the torque from the driving shaft 17 to the additional rotary weight 16, and upon taking the energy, once the angular speed ω₁ of the driving shaft 17 is lower than the angular speed ω₂ of the additional rotary weight 16, the one-way coupling 18 is disconnected, allowing free rotation of the additional rotary weight 16 on the driving shaft 17.

Fig. 5, fig. 6 and fig 7 demonstrate the third embodiment of the invention with additional rotary weights 16 driven by gears 7. In this embodiment four guides 19 with toothed driving surfaces 6 being in contact with the gears 7 are placed at one face side of the rotor 4, and rotary weights 16 are placed at the opposite face side of the rotor 4. As it is shown in fig. 6, the driving shaft 17 connecting the gear 7 with the additional rotary weight 16 runs in the guiding recess 20 made in the rotor 4 parallelly to the toothed driving surface 6 of the guide 19. Identically as in the previously described embodiments, the axis 8 of the rotor 4 is fastened to the load-bearing structure 9, to which also the guide 10 of the driving means 1 is fastened too. Fig. 7 illustrates the method of fastening the rotor device to the load-bearing structure plate 9 of a vehicle. As it is shown in this figure, the axis 8 of the rotor 4 and the guide 10 with the driving means 1 made as a toothed bar being slidably fastened in it are fastened to the load-bearing structure plate 9 of a vehicle.

Fig. 8 and fig. 9 demonstrate the rotor device with eight guides 5, 21 having toothed driving surfaces 6, 22 of different length. As it is shown in fig. 8, the rotor device according to this embodiment has four long guides 5 and four short guides 21 in the rotor 4, said guides running radially. In order to enhance visibility, no covers 15 are shown in the rotor device according to this embodiment illustrated in fig. 8. Toothed driving surfaces 6, 22 of guides 5, 21 are coupled with gears 7, said gears 7, as it is shown in fig. 9, being axially connected via driving shafts 17 with additional rotary weights 16 placed at both face sides of the rotor 4. As it is shown in fig. 9, the driving shaft 17, connecting each gear 7 with additional rotary weights 16, runs in guiding recesses 14 made in covers 15. Guides 5, 21 with toothed driving surfaces 6, 22 of different length are provided in order to better adjust the characteristics of the moment of inertia of the rotor device, whereby the versatility of that device and the possibility to apply it for accumulating and dissipating kinetic energy of differing value are increased.

In another embodiment in fig. 10 another rotor device structure according to the invention is shown in the side view, in which the inertia moment characteristics may be shaped by employing additional rotary weights 16, 23 of different sizes and gears 7, 24 of different diameters. In the illustrated embodiment gears 7 having greater diameters are coupled with rotary weights 23 having greater moment of inertia, while rotary weights 16 having smaller moment of inertia are coupled with gears 24 having a smaller diameter. The selection of diameters of gears 7, 24 and the selection of moments of inertia of the rotary weights 23, 16 attributed thereto depend on the required characteristics of action of the device according to the invention. Configurations of said device are possible in which gears of the same diameter and rotary weights with different moments of inertia are used, gears of different diameters and rotary weights of the same moments of inertia are used, or any mixed configurations.

The action of the solution according to the invention is best illustrated by fig. 1A. The transmitted kinetic energy is initially attenuated in the elastic shock absorber 2 and transmitted to the driving means 1 made in form of a toothed bar meshed with teeth 3 of the rotor 4. Thus the movement of the toothed bar results in the rotation of the rotor 4, and the centrifugal force acting on the gear 7 causes its movement and rotation on the toothed driving surface 6. While moving in plane and rotary motion the gear 7 increases the moment of inertia of the entire rotor device.

In the first stage of energy transmission, the moment of inertia of the rotor devices is the lowest since the gear 7 has not yet begun its plane and rotary motion, and in addition the gear is located closest to the rotor rotation axis. In the subsequent stage of collision, the moment of inertia advantageously increases due to rotary motion and movement of the gear 7. Energy possibly accumulated in the rotor device according to the invention is equal to the kinetic energy of the plane motion and the kinetic energy of the rotary motion of all parts of that rotor device moving in relation to the load-bearing structure 9.

The coupling of gear 7 with the toothed driving surface results in a considerable deceleration of movement of that gear towards outside, what positively affects the characteristics of the increase of inertia moment, thus ensuring the decrease of impact forces in the first stage of taking energy, and the optimisation of the energy taking in the subsequent stages.

The rotor device according to the second embodiment illustrated in fig. 3 and fig. 4 is intended for accumulating and dissipating greater kinetic energies. A suitable increase in the moment of inertia is achieved in this embodiment, particularly in the subsequent stages of energy taking, by using additional rotary weights 16 together with a one-way coupling 18 with the gear 4.

A similar increase in the moment of inertia is ensured by the embodiment illustrated in fig. 5, fig. 6 and fig. 7. Moreover this solution ensures a better distribution of forces in order to protect the device against interlocking during operation.

In the most advantageous embodiment illustrated in fig. 8 and fig. 9 the best distribution of forces is achieved by using additional rotary weights 16 at both sides of the rotor 4, and simultaneously an increased moment of inertia is achieved.

## Claims

1. A method of accumulating kinetic energy from the collision of objects being in motion, by which kinetic energy of a driving means (1) made as a toothed bar is converted into kinetic energy of a rotor device with variable moment of inertia by bringing a rotor (4) into rotary motion, said variable moment of inertia of the rotor device being achieved by moving by a centrifugal force at least one weight (7, 16, 23, 24) along a trajectory set by a guide (5, 19, 21) integrated with the rotor (4), **characterised in that** the weight (7, 16, 23, 24) moved along the trajectory set by the guide (5, 19, 21) and meshed with a toothed driving surface (6, 22) is brought by the centrifugal force into additional rotary motion in relation to its own axis.

2. A method according to claim 1, **characterised in that** the variable moment of inertia of the rotor device is achieved by moving multiple rotary weights by the centrifugal force.

3. A method according to claim 2, **characterised in that** at least two of the rotary weights (7, 24) have different rotational speeds in relation to their axes.

4. A rotor device for accumulating and dissipating kinetic energy from the collision of objects being in motion, containing a driving means (1) made as a toothed bar transmitting kinetic energy to a rotor (4) having a variable moment of inertia with at least one guide (5, 19, 21) along which a weight increasing the moment of inertia is moved by a centrifugal force related to the rotation of the rotor (4), **characterised in that** the guide (5, 19, 21) of the rotor (4) has a toothed driving surface (6, 22) meshed with a gear (7) being a rotary weight.

5. A rotor device according to claim 4, **characterised in that** the gear (7) is connected axially with an additional rotary weight (16) via a driving shaft (17) slidably fitted in guiding recesses (14) created in covers (15).

6. A rotor device according to claim 4, **characterised in that** the guide (19) with toothed driving surface (6) being in contact with the gear (7) is situated at one face side of the rotor (4), and an additional rotary weight (16) is situated at the opposite face side of the rotor (4), whereas a driving shaft (17) connecting the gear (7) with the additional rotary weight (16) is slidably fitted in a guiding recess (20) formed in the rotor (4), whereas a path of said guiding recess (20) is parallel to a path of the guide (19) having the toothed driving surface (6).

7. A rotor device according to claim 4, **characterised in that** the gear (7) is connected axially via a driving shaft (17) with additional rotary weights (16) situated at both face sides of the rotor (4), whereas the driving shaft (17) connecting the gear (7) with the additional rotary weights (16) is slidably fitted in guiding recesses (14) made in covers (15).

8. A rotor device according to claim 5, or 6 or 7, **characterised in that** the additional rotary weight (16) is connected axially with the gear (7) via a one-way coupling (18).

9. A rotor device according to claim 4 or 5, or 6 or 7, **characterised in that** the guide (5, 19) with the toothed driving surface (6) extends substantially radially in relation to the rotor axis.

10. A rotor device according to claim 4 or 5, or 6 or 7, **characterised in that** the rotor (4) has many guides (5, 19) with the toothed driving surface (6) situated substantially radially in relation to the axis (8) of the rotor (4).

11. A rotor device according to claim 4 or 5, or 6 or 7, **characterised in that** the rotor (4) has many guides (5, 21) with the toothed driving surface (6, 22) of differing length situated substantially radially in relation to the axis (8) of the rotor (4).

12. A rotor device according to claim 4 or 5, or 6 or 7, **characterised in that** the rotor (4) has multiple guides (5) with the toothed driving surface (6), whereas at least two additional rotary weights (16, 23) have different moments of inertia.

13. A rotor device according to claim 4 or 5, or 6 or 7, **characterised in that** the rotor (4) has multiple guides (5) with the toothed driving surface (6), whereas at least two additional rotary weights (16, 23) are driven by the gears (7, 24) having different diameters.

14. A rotor device according to claim 4 or 5, or 6 or 7, **characterised in that** the rotor (4) has the form of a gear, whose teeth (3) mesh with the driving means (1) made as a toothed bar.

15. A rotor device according to claim 4 or 5, or 6 or 7, **characterised in that** the driving means (1) has a shock absorber (2).

## Patentansprüche

1. Verfahren zur Speicherung kinetischer Energie von Kollision der Objekte die in Bewegung sind, wobei kinetische Energie einer Antriebsvorrichtung (1), die als eine Zahnstange ausgebildet ist, in kinetische Energie einer Rotorvorrichtung mit variablem Trägheitsmoment durch Setzen des Rotors (4) in Drehbewegung umgewandelt wird, wobei das variable Trägheitsmoment der Rotorvorrichtung dadurch vollbracht wird, dass mindestens ein Gewicht (7, 16, 23, 24) durch Zentrifugalkraft in Bewegung gesetzt wird, entlang einerTrajektorie die von einer mit dem Rotor (4) integrierten Führung (5, 19, 21) festgelegt wird, **dadurch gekennzeichnet, dass** das Gewicht (7, 16, 23, 24), bewegt entlang der von der Führung (5, 19, 21) festgelegten Trajektorie und vermascht mit einer bezahnten Antriebsoberfläche (6, 22), durch die Zentrifugalkraft in zusätzliche Drehbewegung zu seiner eigenen Achse gesetzt wird.

2. Verfahren nach Anspruch 1, **dadurch gekennzeichnet, dass** das variable Trägheitsmoment der Rotorvorrichtung dadurch vollbracht wird, dass vielfache Drehgewichte durch die Zentrifugalkraft in Bewegung gesetzt werden.

3. Verfahren nach Anspruch 2, **dadurch gekennzeichnet, dass** mindestens zwei von den Drehgewichten (7, 24) unterschiedliche Drehzahlen zu ihren Achsen aufweisen.

4. Eine Rotorvorrichtung zur Speicherung und Ableitung kinetischer Energie von Kollision der Objekte die in Bewegung sind, umfassend eine Antriebsvorrichtung (1), die als eine Zahnstange ausgebildet ist, die kinetische Energie auf den Rotor (4) überträgt, wobei der Rotor ein variables Trägheitsmoment aufweist, mit mindestens einer Führung (5, 19, 21), entlang deren ein Gewicht, das das Trägheitsmoment erhöht, durch eine mit der Drehung des Rotors (4) verbundene Zentrifugalkraft bewegt wird, **dadurch gekennzeichnet, dass** die Führung (5, 19, 21) des Rotors (4) eine bezahnte Antriebsoberfläche (6, 22) aufweist, vermascht mit einem Getriebe (7) das ein Drehgewicht ist.

5. Eine Rotorvorrichtung nach Anspruch 4, **dadurch gekennzeichnet, dass** das Getriebe (7) mit einem zusätzlichen Drehgewicht (16) axial verbunden ist, mittels einer Antriebswelle (17) die in die Führungsaussparungen (14) die Abdeckung (15) aufweisen verschiebbar eingepasst ist.

6. Eine Rotorvorrichtung nach Anspruch 4, **dadurch gekennzeichnet, dass** die Führung (19) mit bezahnter Antriebsoberfläche (6), die in Berührung mit dem Getriebe (7) ist, sich auf einer Außenseite des Rotors (4) befindet, und ein zusätzliches Drehgewicht (16) sich auf der gegenüberliegenden Außenseite des Rotors (4) befindet, wobei die Antriebswelle (17), die das Getriebe (7) mit dem zusätzlichen Drehgewicht (16) verbindet, in eine in den Rotor (4) angeordnete Führungsaussparung (20) verschiebbar eingepasst ist, wobei ein Weg dieser Führungsaussparung (20) parallel zum Weg der Führung (19) mit bezahnter Antriebsoberfläche (6) ist.

7. Eine Rotorvorrichtung nach Anspruch 4, **dadurch gekennzeichnet, dass** das Getriebe (7) mit zusätzlichen Drehgewichten (16), die auf beiden Außenseiten des Rotors (4) angeordnet sind, mittels einer Antriebswelle (17) axial verbunden ist, wobei die Antriebswelle (17) die das Getriebe (7) mit zusätzlichen Drehgewichten (16) verbindet, in Führungsaussparungen (14) die Abdeckung (15) aufweisen verschiebbar eingepasst ist.

8. Eine Rotorvorrichtung nach Anspruch 5 oder 6, oder 7, **dadurch gekennzeichnet, dass** das zusätzliche Drehgewicht (16) mit dem Getriebe (7) mittels einer Einwegkupplung (18) axial verbunden ist.

9. Eine Rotorvorrichtung nach Anspruch 4 oder 5, oder 6, oder 7, **dadurch gekennzeichnet, dass** sich die Führung (5, 19) mit der bezahnten Antriebsoberfläche (6) im Wesentlichen radial zur Rotorachse erstreckt.

10. Eine Rotorvorrichtung nach Anspruch 4 oder 5, oder 6, oder 7, **dadurch gekennzeichnet, dass** der Rotor (4) eine Vielzahl von Führungen (5, 19) mit bezahnten Antriebsoberflächen (6) aufweiset, die im Wesentlichen radial zur Achse (8) des Rotors (4) gelegen sind.

11. Eine Rotorvorrichtung nach Anspruch 4 oder 5, oder 6, oder 7, **dadurch gekennzeichnet, dass** der Rotor (4) eine Vielzahl von Führungen (5, 21) mit bezahnten Antriebsoberflächen (6, 22) unterschiedlicher Länge aufweist, die im Wesentlichen radial zur Achse (8) des Rotors (4) gelegen sind.

12. Eine Rotorvorrichtung nach Anspruch 4 oder 5, oder 6, oder 7, **dadurch gekennzeichnet, dass** der Rotor (4) eine Vielzahl von Führungen (5) mit bezahnten Antriebsoberflächen (6) aufweist, wobei mindestens zwei zusätzliche Drehgewichte (16, 23) unterschiedliche Trägheitsmomente aufweisen.

13. Eine Rotorvorrichtung nach Anspruch 4 oder 5, oder 6, oder 7, **dadurch gekennzeichnet, dass** der Rotor (4) eine Vielzahl von Führungen (5) mit bezahnten Antriebsoberflächen (6) aufweist, wobei mindestens zwei zusätzliche Drehgewichte (16, 23) durch Getriebe (7, 24) mit unterschiedlichen Durchmesser angetrieben werden.

14. Eine Rotorvorrichtung nach Anspruch 4 oder 5, oder 6, oder 7, **dadurch gekennzeichnet, dass** der Rotor (4) als ein Getriebe geformt ist, dessen Verzahnung (3) mit der Antriebsvorrichtung (1), die die als eine Zahnstange ausgebildet ist, vermascht.

15. Eine Rotorvorrichtung nach Anspruch 4 oder 5, oder 6, oder 7, **dadurch gekennzeichnet, dass** die Antriebsvorrichtung (1) einen Stoßdämpfer (2) aufweist.

## Revendications

1. Procédé d'accumulation d'énergie cinétique à partir de la collision d'objets étant en mouvement, par lequel l'énergie cinétique d'un moyen d'entraînement (1) fait comme une barre dentée est convertie en énergie cinétique d'un dispositif de rotor avec un moment d'inertie variable en mettant un rotor (4) en mouvement rotatif, ledit moment d'inertie variable du dispositif de rotor étant obtenu en déplaçant par une force centrifuge au moins un poids (7, 16, 23, 24) le long d'une trajectoire par un guide (5, 19, 21) intégré avec le rotor (4), **caractérisé en ce que** le poids (7, 16, 23, 24) déplacé le long de la trajectoire par le guide (5, 19, 21) et engrené avec une surface d'entraînement dentée (6, 22) est mis par la force centrifuge en mouvement rotatif supplémentaire par rapport à son propre axe.

2. Procédé selon la revendication 1, **caractérisé en ce que** le moment d'inertie variable du dispositif de rotor est obtenu en déplaçant des poids rotatifs multiples par la force centrifuge.

3. Procédé selon la revendication 2, **caractérisé en ce qu'**au moins deux des poids rotatifs (7, 24) ont des vitesses de rotation différentes par rapport à leurs axes.

4. Dispositif de rotor pour l'accumulation et la dissipation d'énergie cinétique à partir de la collision d'objets étant en mouvement, contenant un moyen d'entraînement (1) fait comme une barre dentée transmettant l'énergie cinétique à un rotor (4) ayant un moment d'inertie variable et au moins un guide (5, 19, 21) le long duquel un poids qui augmente le moment d'inertie est déplacé par une force centrifuge liée à la rotation du rotor (4), **caractérisé en ce que** le guide (5, 19, 21) du rotor (4) a une surface d'entraînement dentée (6, 22) engrenée avec une roue dentée (7) constituant un poids rotatif.

5. Dispositif de rotor selon la revendication 4, **caractérisé en ce que** la roue dentée (7) est reliée axialement avec un poids rotatif supplémentaire (16) par l'intermédiaire d'un arbre d'entraînement (17) monté de façon coulissante dans des renfoncements de guidage (14) créés dans des couvertures (15).

6. Dispositif de rotor selon la revendication 4, **caractérisé en ce que** le guide (19) avec une surface d'entraînement dentée (6) étant en contact avec la roue dentée (7) est situé sur un côté frontal du rotor (4), et un poids rotatif supplémentaire (16) est situé sur le côté frontal opposé du rotor (4), considérant qu'un arbre d'entraînement (17) qui relie la roue dentée (7) avec le poids rotatif supplémentaire (16) est monté de façon coulissante dans un renfoncement de guidage (20) formé dans le rotor (4), considérant qu'une trajectoire dudit renfoncement de guidage (20) est parallèle à une trajectoire du guide (19) ayant la surface d'entraînement dentée (6).

7. Dispositif de rotor selon la revendication 4, **caractérisé en ce que** la roue dentée (7) est reliée axialement par l'intermédiaire d'un arbre d'entraînement (17) avec les poids rotatifs supplémentaires (16) situés sur les deux côtés frontaux du rotor (4), considérant que l'arbre d'entraînement (17) reliant la roue dentée (7) avec les poids rotatifs supplémentaires (16) est monté de façon coulissante dans des renfoncements de guidage (14) créés dans des couvertures (15).

8. Dispositif de rotor selon la revendication 5, ou 6 ou 7, **caractérisé en ce que** le poids rotatif supplémentaire (16) est relié axialement avec la roue dentée (7) par l'intermédiaire d'un accouplement unidirectionnel (18).

9. Dispositif de rotor selon la revendication 4 ou 5, ou 6 ou 7, **caractérisé en ce que** le guide (5,19) avec la surface d'entraînement dentée (6) s'étend sensiblement radialement par rapport à l'axe du rotor.

10. Dispositif de rotor selon la revendication 4 ou 5, ou 6 ou 7, **caractérisé en ce que** le rotor (4) a de nombreux guides (5, 19) avec la surface d'entraînement dentée (6) situés sensiblement radialement par rapport à l'axe (8) du rotor (4).

11. Dispositif de rotor selon la revendication 4 ou 5, ou 6 ou 7, **caractérisé en ce que** le rotor (4) a de nombreux guides (5, 21) avec la surface d'entraînement dentée (6, 22) de longueur différente situés sensiblement radialement par rapport à l'axe (8) du rotor (4).

12. Dispositif de rotor selon la revendication 4 ou 5, ou 6 ou 7, **caractérisé en ce que** le rotor (4) a plusieurs guides (5) avec la surface d'entraînement dentée (6), considérant qu'au moins deux poids rotatifs supplémentaires (16, 23) ont des moments d'inertie différents.

13. Dispositif de rotor selon la revendication 4 ou 5, ou 6 ou 7, **caractérisé en ce que** le rotor (4) a plusieurs guides (5) avec la surface d'entraînement dentée (6), considérant qu'au moins deux poids rotatifs supplémentaires (16, 23) sont entraînés par les roues dentées (7, 24) ayant des diamètres différents.

14. Dispositif de rotor selon la revendication 4 ou 5, ou 6 ou 7, **caractérisé en ce que** le rotor (4) a la forme d'une roue dentée, dont les dents (3) engrènent avec le moyen d'entraînement (1) fait comme une barre dentée.

15. Dispositif de rotor selon la revendication 4 ou 5, ou 6 ou 7, **caractérisé en ce que** le moyen d'entraînement (1) a un amortisseur (2).
